# FASCICULE DE BREVET EUROPEEN

(11) **EP 2 340 636 B1**
(45) Date de publication et mention de la délivrance du brevet: **19.12.2018**
(21) Numéro de dépôt: 09745969.7
(22) Date de dépôt: 20.04.2009
(51) Int. Cl.: H04L 12/70

(54) **MECANISME DE MISE A JOUR DES PARAMETRES D'UNE SESSION ETABLIE AU TRAVERS D'UN CIRCUIT VIRTUEL**
MECHANISMUS ZUR AKTUALISIERUNG VON PARAMETERN EINER ÜBER EINE VIRTUELLE SCHALTUNG HERGESTELLTEN SITZUNG
MECHANISM FOR UPDATING PARAMETERS OF A SESSION ESTABLISHED THROUGH A VIRTUAL CIRCUIT

(30) Priorité: 24.04.2008 FR 0852765
(43) Date de publication de la demande: 06.07.2011
(73) Titulaire: Transpacific IP Group Limited, Grand Cayman KY1-1001 (KY)
(72) Inventeur: JOUNAY, Frédéric, F-22560 Pleumeur Bodou (FR); LE ROUX, Jean-Louis, F-22300 Lannion (FR)
(74) Mandataire: Eidelsberg, Olivier Nathan
(86) Numéro de dépôt international: PCT/FR2009/050729
(87) Numéro de publication internationale: WO 2009/138650

(56) Documents cités:
- PRAVEEN MULEY MUSTAPHA AISSAOUI MATTHEW BOCCI PRANJAL KUMAR DUTTA MARC LASSERRE ALCATEL-LUCENT JONATHAN NEWTON CABLE & WIRELESS OL: "Preferential Forwarding Status bit definition; draft-ietf-pwe3-redundancy-bit-00.txt" IETF STANDARD-WORKING-DRAFT, INTERNET ENGINEERING TASK FORCE, IETF, CH, vol. pwe3, 25 février 2008 (2008-02-25), XP015053783 ISSN: 0000-0004
- ERIC MANNIE (CONSULTING) DIMITRI PAPADIMITRIOU (ALCATEL) LYNDON ONG (CIENA): "GMPLS LSP Bandwidth Modification (LBM) for SONET/SDH; draft-mannie-ccamp-gmpls-lbm-tdm-04.txt" IETF STANDARD-WORKING-DRAFT, INTERNET ENGINEERING TASK FORCE, IETF, CH, no. 4, 1 novembre 2002 (2002-11-01), XP015032030 ISSN: 0000-0004
- LUCA MARTINI (ED) CISCO SYSTEMS INC MATTHEW BOCCI (ED) ALCATEL-LUCENT FLORIN BALUS (ED) ALCATEL-LUCENT: "Dynamic Placement of Multi Segment Pseudo Wires; draft-ietf-pwe3-dynamic-ms-pw-06.txt" IETF STANDARD-WORKING-DRAFT, INTERNET ENGINEERING TASK FORCE, IETF, CH, vol. pwe3, no. 6, 1 novembre 2007 (2007-11-01), XP015053767 ISSN: 0000-0004 cité dans la demande

## Description

L'invention se situe dans le domaine des télécommunications, et plus particulièrement le domaine des réseaux de commutation de paquets.

Dans un réseau de commutation de paquets ou *Paquet Switched Network* (PSN) en anglais, les données à transmettre se présentent sous forme de paquets traités par des équipements de commutation du réseau jusqu'à atteindre leur destination. L'ensemble des paquets à transmettre constitue un flux de données.

Un exemple de technologie utilisé dans les réseaux de commutation de paquets pour acheminer des paquets de données, est la technologie MPLS (*MultiProtocol Label Switching* ou en français : commutation multi-protocole par étiquette). La technologie MPLS propose de rajouter en entête des paquets de données une ou plusieurs étiquettes contenant des informations permettant aux équipements de commutation du réseau de déterminer le prochain saut qu'un paquet doit effectuer pour atteindre sa destination. La technologie MPLS est décrite plus en détail dans un document de l'IETF (groupe de standardisation de l'Internet, abréviation des termes anglais *Internet Engineering Task Force*), référencé RFC 3031 (RFC signifiant "requête pour commentaires", ou en anglais *Request For Comments*).

Cependant, le protocole MPLS ne permet de traiter que des paquets conformes au protocole IP (*Internet Protocol,* ou protocole internet).

Afin de pallier cet inconvénient, le groupe de standardisation PWE3 (*PseudoWire Emulation Edge to Edge*) de l'IETF définit un concept de circuit virtuel permettant d'émuler un lien point à point entre deux équipements d'un réseau de commutation de paquets reposant sur la technologie IP/MPLS. De tels circuits virtuels, définis dans le document RFC 3985 sous le terme de « *pseudo-wire* » et appelé communément en français « pseudo-liens », permettent la transmission de paquets de données non-conformes au protocole IP, tels que par exemple des paquets de données conformes au protocole ATM.

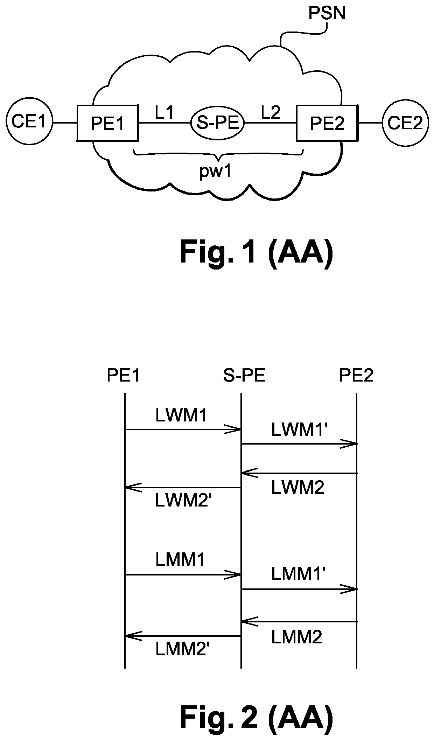

En référence à la figure 1, un circuit virtuel pw1 multi-segments est établi entre un premier équipement de terminaison PE1 disposé en bordure d'un réseau de commutation de paquets PSN et un deuxième équipement de terminaison PE2 également disposé en bordure du réseau PSN. Une fois le circuit virtuel pw1 établi, le premier équipement de terminaison PE1 émet un flux de données transmis à travers le circuit virtuel pw1 jusqu'au deuxième équipement de terminaison PE2. Les équipements de terminaison PE1 et PE2 sont par exemple des routeurs ou des commutateurs Ethernet ou des noeuds PW.

Les données constituant le flux de données émis par l'équipement de terminaison PE1 sont générées par un premier équipement client CE1 connecté à l'équipement de terminaison PE1.

Un deuxième équipement client CE2 connecté à l'équipement de terminaison PE2 traite les données constituant le flux de données reçues par l'équipement de terminaison PE2.

L'équipement de terminaison PE2 encapsule les données générées par l'équipement client CE2 selon un format prédéterminé. Un exemple d'un tel format est le volume de données. On entend par volume des données la tailles des blocs en lesquels les données peuvent être découpées, par exemple des blocs de 15 bits de charge utile, ou encore en un nombre fixe de cellules ATM que l'équipement PE1 peut recevoir. L'équipement de terminaison PE2 est configuré pour encapsuler les données conformément à ce format prédéterminé.

L'équipement de terminaison PE1 est lui aussi, configuré pour recevoir des données conformes au format prédéterminé selon lequel elles ont été encapsulées par l'équipement de terminaison PE2.

L'établissement du circuit virtuel pw1 destiné à transmettre des données depuis l'équipement de terminaison PE2 vers l'équipement de terminaison PE1 est à l'initiative de l'équipement de terminaison PE1 et repose sur l'échange de messages d'établissement conformes au protocole LDP (*Label Distribution Protocol*, ou protocole de distribution d'étiquette en français) tel que défini dans les documents RFC3036 et RFC4477. Ainsi, un premier message d'établissement d'un circuit virtuel est émis par l'équipement de terminaison PE1 à destination d'un équipement commutateur S-PE du réseau PSN établissant une première liaison L1 constitutive du circuit virtuel pw1. Ce premier message d'établissement comporte un identifiant SAII1 de l'équipement de terminaison d'entrée PE1, et un identifiant TAII2 de l'équipement de terminaison de sortie PE2, des paramètres du circuit virtuel, et une première étiquette. Cette première étiquette est destinée à être ajoutée en entête de toutes les données émises par l'équipement commutateur S-PE à destination de l'équipement de terminaison PE1 au travers de la première liaison du circuit virtuel pw1.

Une deuxième liaison L2, elle aussi constitutive du circuit virtuel pw1, est, quant à elle, établie entre l'équipement commutateur S-PE et le deuxième équipement de terminaison PE2. L'équipement commutateur S-PE émet un deuxième message d'établissement à destination du deuxième équipement de terminaison PE2. Ce deuxième message comporte un identifiant SAII1 de l'équipement de terminaison PE1, et un identifiant TAII2 de l'équipement de terminaison PE2, des paramètres du circuit virtuel, et une deuxième étiquette. Cette deuxième étiquette est destinée à être ajoutée en entête de toutes les données émises par le deuxième équipement de terminaison PE2 à destination de l'équipement commutateur S-PE au travers de la deuxième liaison du circuit virtuel pw1.

A réception du message d'établissement d'un circuit virtuel, l'équipement de terminaison PE2 émet à destination de l'équipement commutateur S-PE un troisième message d'établissement d'un circuit virtuel comportant un identifiant SAII2 de l'équipement de terminaison PE2, et un identifiant TAII1 de l'équipement de terminaison PE1, des paramètres du circuit virtuel, et une troisième étiquette. Cette troisième étiquette est destinée à être ajoutée en entête de toutes les données émises par l'équipement commutateur S-PE à destination de l'équipement de terminaison PE2 au travers de la deuxième liaison du circuit virtuel pw1.

L'équipement commutateur S-PE émet à destination du premier équipement de terminaison PE1 un quatrième message d'établissement d'un circuit virtuel comportant un identifiant SAII2 de l'équipement de terminaison PE2, et un identifiant TAII1 de l'équipement de terminaison PE1, des paramètres du circuit virtuel, et une quatrième étiquette. Cette quatrième étiquette est destinée à être ajoutée en entête de toutes les données émises par le premier équipement de terminaison PE1 à destination de l'équipement commutateur S-PE au travers de la première liaison du circuit virtuel pw1.

Une fois le circuit virtuel pw1 établi entre l'équipement de terminaison PE1 et l'équipement de terminaison PE2, celui-ci transmet de manière bidirectionnelle des données entre l'équipement de terminaison PE1 et l'équipement de terminaison PE2. Un tel circuit virtuel pw1 est défini plus en détail dans le document « *An Architecture for Multi-Segment Pseudo-Wire Emulation Edge-to-Edge. draft-ietf-pwe3-ms-pw-arch-02.txt* ».

Dans ce cas de figure, l'équipement client CE1 connecté à l'équipement de terminaison PE1 est apte à traiter les données générées par l'équipement client CE2 connecté à l'équipement de terminaison PE2.

Les couples {identifiant SAII1 de l'équipement de terminaison PE1/identifiant TAII2 de l'équipement de terminaison PE2} et {identifiant SAII2 de l'équipement de terminaison PE2/identifiant TAII1 de l'équipement de terminaison PE1} constituent deux FEC (*Forwarding Equivalent Class*, ou en français classe d'équivalence de transfert), qui identifient chacune un sens de transmission du même circuit virtuel pw1.

Lorsqu'un opérateur en télécommunication gestionnaire du réseau PSN souhaite augmenter le débit d'un circuit virtuel, il est nécessaire de modifier le format des données transmises au travers du circuit virtuel pw1. Pour cela, deux solutions s'offrent à lui.

Une première solution consiste à détruire le circuit virtuel pw1 et à en établir un nouveau apte à transmettre des données conformes au nouveau format.

La figure 2 représente un diagramme des échanges de messages intervenant entre l'équipement de terminaison PE1, l'équipement commutateur S-PE et l'équipement de terminaison PE2 lorsque cette solution est mise en oeuvre.

Lorsqu'un changement de format des données intervient au niveau du premier équipement client CE1, celui-ci en informe l'équipement de terminaison PE1. L'équipement de terminaison PE1 émet alors, à destination de l'équipement commutateur S-PE un message LWM1 demandant la libération des ressources utilisées par la première liaison L1 du circuit virtuel pw1 dans le sens remontant, c'est-à-dire de l'équipement commutateur S-PE vers l'équipement de terminaison PE1. A réception de ce message LWM1, l'équipement commutateur émet à son tour, à destination de l'équipement de terminaison PE2, un message LWM1' demandant la libération des ressources utilisées par la deuxième liaison L2 du circuit virtuel pw1 dans le sens remontant, c'est-à-dire de l'équipement de terminaison PE2 vers l'équipement commutateur S-PE.

A réception du message LWM1', l'équipement de terminaison PE2 émet à son tour, à destination de l'équipement commutateur S-PE, un message LWM2 demandant la libération des ressources utilisées par la deuxième liaison L2 du circuit virtuel pw1 dans le sens descendant, c'est-à-dire de l'équipement commutateur S-PE vers le deuxième équipement de terminaison PE2. A réception de ce message LWM2, l'équipement commutateur S-PE émet à son tour, à destination de l'équipement de terminaison PE1, un message LWM2' demandant la libération des ressources utilisées par la première liaison L1 du circuit virtuel pw1 dans le sens descendant, c'est-à-dire de l'équipement de terminaison PE1 vers l'équipement commutateur S-PE.

A réception du message LWM2', l'équipement de terminaison PE1 émet, à destination de l'équipement commutateur S-PE, un premier message d'établissement LMM1 d'un nouveau circuit virtuel. A réception du message d'établissement LMM1, l'équipement commutateur émet à son tour, à destination de l'équipement de terminaison PE2, un deuxième message d'établissement LMM1'.

A réception du message LMM1', l'équipement de terminaison PE2 émet un troisième message d'établissement LMM2 à destination de l'équipement commutateur S-PE. A réception du message d'établissement LMM2, l'équipement commutateur émet à son tour, à destination de l'équipement de terminaison PE1, un quatrième message d'établissement LMM12'.

Les messages d'établissement LMM1, LMM1' et LMM2, LMM2' du nouveau circuit virtuel comportent chacun une FEC permettant d'identifier le nouveau circuit virtuel et des nouveaux paramètres du circuit virtuel, pour le sens remontant dans les messages LMM1 et LMM1' et pour le sens descendant dans les messages LMM2 et LMM2'. Ainsi, le nouveau circuit virtuel établi est apte à transmettre des données conformes au nouveau format pour chacun des sens de transmission.

Une telle solution nécessite, lors de sa mise en oeuvre, une interruption du trafic des paquets de données entre l'équipement de terminaison PE1 et l'équipement de terminaison PE2. Selon la nature des données acheminées par le circuit virtuel, une telle interruption du trafic est préjudiciable à la qualité de service. C'est notamment le cas si les données acheminées sont des données temps-réel.

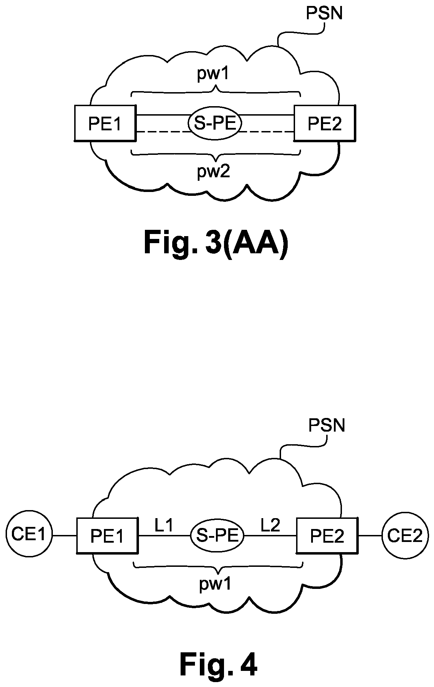

Une deuxième solution, représentée à la figure 3, consiste à établir un second circuit virtuel pw2 entre l'équipement de terminaison PE1 et l'équipement de terminaison PE2. Les éléments de cette figure déjà décrits à la figure 1 portent les mêmes références et ne sont pas décrits de nouveau.

Les messages d'établissement du circuit virtuel pw2, dans le sens remontant et dans le sens descendant, comportent chacun une FEC distincte de la FEC correspondante identifiant le circuit virtuel pw1, et les nouveaux paramètres du nouveau circuit virtuel pw2.

Dans cette solution, à chaque modification du format des données en vue de modifier le débit d'un circuit virtuel, un nouveau circuit virtuel doit être établi entre l'équipement de terminaison PE1 et l'équipement de terminaison PE2.

Par exemple, le document de travail « Preferential Forwarding Status bit définition; draft-ietf-pwe3-redundancy-bit-00.txt » proposé à l'IETF en février 2008 par Alcatel Lucent, Cable&Wireless, Extreme Networks, Nortel, Cisco Systems Inc. et BT décrit une méthode de sélection dynamique d'un pseudo-lien de secours parmi une pluralité de pseudo-liens établis entre deux équipements de terminaison PE.

Bien que permettant d'assurer une continuité du service, une telle solution présente l'inconvénient d'être consommatrice en ressources du réseau telles que, par exemple, des ressources de traitement dans les équipements (capacité de mémoire de stockage, capacité de calcul, etc.).

Le document de travail « GMPLS LSP Bandwidth Modification (LBM) for SONET/SDH; draft-mannie-ccamp-gmpls-lbm-tdm-04.txt »" proposé en novembre 2002 par Consulting, Alcatel et Ciena concerne une solution de modification dynamique de la bande passante d'un LSP (Label Switched Path ou chemin commuté par étiquette) pour les réseaux SONET/SDH. Pour cela, le document propose d'ajouter ou supprimer des circuits virtuels à un LSP. Cette solution présente également l'inconvénient d'être consommatrice de resources de traitement dans les équipements.

La solution proposée dans le cadre de l'invention ne présente pas les inconvénients des solutions de l'art antérieur.

En effet, la solution objet de l'invention repose sur un procédé de communication selon la revendication 1, un équipement de terminaison selon la revendication 5, un équipement commutateur selon la revendication 6 et un programme d'ordinateur selon la revendication 7. Des modes de réalisations sont définis dans les revendications dépendantes.

D'autres caractéristiques et avantages apparaîtront à la lecture de modes de réalisation préférés décrits en référence aux dessins dans lesquels :
- la figure 1, déjà décrite en référence à l'état de l'art, représente un circuit virtuel établi conformément à l'état de l'art, entre un premier et un deuxième équipements de terminaison appartenant à un réseau de commutation de paquets,
- la figure 2, également décrite en référence avec l'état de l'art, représente un diagramme temporel d'échanges de requêtes entre un premier et un deuxième équipements de terminaison appartenant à un réseau de commutation de paquets, afin de supprimer un premier circuit virtuel établi entre les deux équipements de terminaison, et d'établir un deuxième circuit virtuel, selon une première solution de l'art antérieur,
- la figure 3 représente deux circuits virtuels établis conformément la deuxième solution décrite en référence à l'art antérieur,
- la figure 4 représente un circuit virtuel établi entre un premier et un deuxième équipements de terminaison, lesdits équipements de terminaison mettant en oeuvre le procédé de communication objet de l'invention,
- la figure 5 représente les étapes du procédé de communication de données objet de l'invention,
- les figures 6A, 6B, 6C et 6D représentent des messages de signalisation émis entre les différents équipements du réseau de commutation de paquets lors de la mise en oeuvre de la solution objet de l'invention,
- la figure 7 propose un diagramme temporel d'échanges de messages entre le premier et le deuxième équipements de terminaison lors de la mise en oeuvre du procédé de commutation objet de l'invention,
- la figure 8 représente un équipement de terminaison apte à mettre en oeuvre le procédé de communication objet de l'invention,
- la figure 9 représente un équipement commutateur apte à mettre en oeuvre le procédé de communication objet de l'invention.

La figure 4 représente une connexion établie entre un premier équipement de terminaison PE1 et un deuxième équipement de terminaison PE2 tous deux disposés en bordure d'un réseau de commutation de paquets PSN.

En référence à cette figure, un circuit virtuel pw1 est établi entre le premier équipement de terminaison PE1 et le deuxième équipement de terminaison PE2 au travers d'un ou plusieurs équipements commutateur S-PE. Un tel circuit virtuel comprend une première liaison L1 établie entre le premier équipement de terminaison PE1 et un équipement commutateur S-PE, et une deuxième liaison L2 établie entre l'équipement commutateur S-PE et le deuxième équipement de terminaison PE2. L'établissement tel circuit virtuel pw1 ce fait de manière dynamique en utilisant la signalisation T-LDP telle que définie dans le document « *draft-ietf-pwe3-dynamic-ms-pw(table de routage PW)* ».

Le circuit virtuel pw1 ainsi établi permet de transmettre des données entre l'équipement de terminaison PE1 et l'équipement de terminaison PE2, les données étant commutées de la première liaison L1 du circuit virtuel pw1 vers la deuxième liaison L2 par l'équipement commutateur S-PE. La transmission des données peut être unidirectionnelle, c'est-à-dire de l'équipement de terminaison PE1 vers l'équipement de terminaison PE2 ou de l'équipement de terminaison PE2 vers l'équipement de terminaison PE1, ou bien bidirectionnelle, c'est-à-dire de l'équipement de terminaison PE2 vers l'équipement de terminaison PE1, sens descendant de la transmission, et de l'équipement de terminaison PE1 vers l'équipement de terminaison PE2, sens remontant de la transmission.

Un exemple d'application de l'invention est la collecte de trafic pour un réseau mobile. Dans un tel exemple, un premier équipement client CE1 tel qu'une station de base est connecté au premier équipement de terminaison. Le premier équipement de terminaison PE1 assure la transmission des données collectées par le premier équipement client CE1 au travers du circuit virtuel pw1 vers l'équipement de terminaison PE2 qui est lui-même connecté à d'autres équipements client CE2 tels qu'un RNC (*Radio Network Controller*, ou contrôleur de réseau radio en français). Conformément à l'invention, l'établissement du circuit virtuel pw1 est à l'initiative de l'équipement de terminaison PE1 et repose sur l'échange de messages d'établissement conformes au protocole LDP entre le premier équipement de terminaison PE1, l'équipement commutateur S-PE et le deuxième équipement de terminaison PE2.

Ainsi, un premier message d'établissement est émis par l'équipement de terminaison PE1 à destination de l'équipement commutateur S-PE, puis un deuxième message d'établissement est émis par l'équipement commutateur à destination de l'équipement de terminaison PE2. Ces messages d'établissement comportent un identifiant SAII1 de l'équipement de terminaison PE1, et un identifiant TAII2 de l'équipement de terminaison PE2, des paramètres définissant une session de communication établie au travers du circuit virtuel pw1, une première étiquette LBL0 pour le premier message et une deuxième étiquette LBL1 pour le deuxième message. Cette deuxième étiquette LBL1 doit être ajoutée en entête de toutes les données émises par l'équipement de terminaison PE2 à destination de l'équipement commutateur S-PE au travers de la liaison L2 du circuit virtuel pw1. La première étiquette LBL0 doit être ajoutée en entête de toutes les données émises par l'équipement commutateur S-PE à destination du premier équipement de terminaison PE1 au travers de la liaison L1 du circuit virtuel pw1.

Les paramètres définissant la session de communication sont fonction du format de données que l'équipement de terminaison PE1 est apte à recevoir et à traiter. En effet, l'équipement de terminaison PE1 traite les données émises par l'équipement de terminaison PE2 au travers du circuit virtuel pw1 selon un format prédéterminé et les transmet ensuite vers l'équipement client CE1. Un exemple d'un tel format est le volume de données. On entend par volume des données la tailles des blocs en lesquels les données peuvent être découpées, par exemple des blocs de 15 bits de charge utile ou encore en un nombre fixe de cellules ATM. L'équipement de terminaison PE1 est configuré pour encapsuler les données conformément à ce format prédéterminé.

D'autres exemples de paramètres définissant la session de communication sont entre autres le numéro d'un canal virtuel d'une cellule ATM, le nombre de cellules ATM, ou le nombre d'intervalles temporels TDM.

A réception du message d'établissement, l'équipement de terminaison PE2 émet à destination de l'équipement de terminaison PE1 un troisième message d'établissement comportant un identifiant SAII2 de l'équipement de terminaison PE2, et un identifiant TAII1 de l'équipement de terminaison PE1, des paramètres définissant la session de communication, et une troisième étiquette. Cette troisième étiquette est destinée à être ajoutée en entête de toutes les données émises par l'équipement commutateur S-PE à destination de l'équipement de terminaison PE2 au travers du circuit virtuel pw1. L'équipement commutateur S-PE émet à destination de l'équipement de terminaison PE1 un quatrième message d'établissement comportant un identifiant SAII2 de l'équipement de terminaison PE2, et un identifiant TAII1 de l'équipement de terminaison PE1, des paramètres définissant la session de communication, et une quatrième étiquette. Cette quatrième étiquette est destinée à être ajoutée en entête de toutes les données émises par l'équipement de terminaison PE1 à destination de l'équipement commutateur S-PE au travers du circuit virtuel pw1.

L'envoi de ces troisième et quatrième messages d'établissement n'intervient que lorsque le circuit virtuel pw1 établi entre les équipements de terminaisons PE1 et PE2 est bidirectionnel.

Une fois établi entre l'équipement de terminaison PE1 et l'équipement de terminaison PE2, le circuit virtuel pw1 transmet de manière bidirectionnelle, au cours d'une phase de transmission de données PH1, des données conformément aux paramètres définissant la session de communication établie entre l'équipement de terminaison PE1 et l'équipement de terminaison PE2.

Les couples {identifiant SAII1 de l'équipement de terminaison PE1/identifiant TAII2 de l'équipement de terminaison PE2} et {identifiant SAII2 de l'équipement de terminaison PE2/identifiant TAII1 de l'équipement de terminaison PE1} constituent deux FEC (*Forwarding Equivalent Class*, ou en français classe équivalente de transfert) identifiant chacune un sens de transmission du même circuit virtuel pw1.

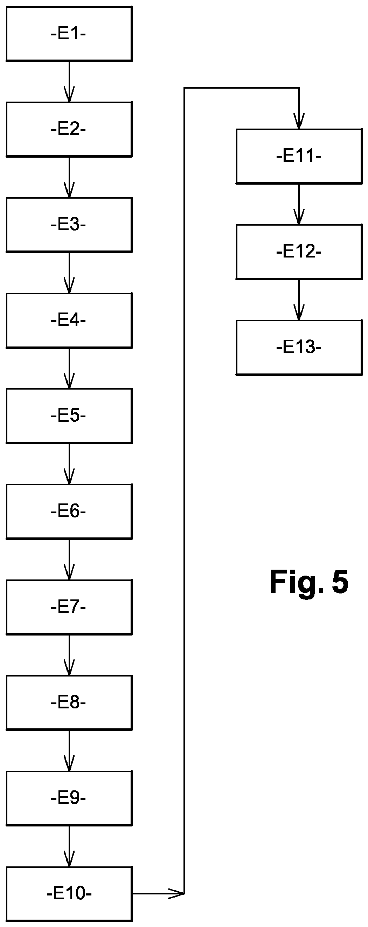

Afin d'augmenter le débit du circuit virtuel pw1, il est nécessaire de modifier le format des données destinées à être reçues par le premier équipement de terminaison PE1, et pour cela établir une deuxième session de communication entre le premier et le deuxième équipement de terminaison PE1, PE2, les paramètres définissant la deuxième session étant distincts des paramètres définissant la session de communication active entre les deux équipements de terminaison. A cette fin, le premier équipement de terminaison met en oeuvre le procédé de communication objet de l'invention dont les étapes sont représentées à la figure 5.

Le procédé de communication est mis en oeuvre au cours d'une phase de transmission de données PH1 entre l'équipement de terminaison PE1 et l'équipement de terminaison PE2 au travers du circuit virtuel pw1 conformément aux paramètres définissant une première session de communication active entre le premier et le deuxième équipement de terminaison. Les échanges de messages de signalisation intervenant lors de la mise en oeuvre du procédé de communication interviennent au niveau d'un plan de commande du circuit virtuel pw1. Ces échanges de messages de signalisation n'interrompent pas la transmission des données au travers du circuit virtuel pw1 puisque celle-ci intervient au niveau d'un plan de transfert du circuit virtuel pw1.

Ainsi, au cours d'une étape E1, l'équipement de terminaison PE1 émet à destination de l'équipement commutateur S-PE un premier message SIG1 de demande d'établissement d'une deuxième session de communication au travers du circuit virtuel pw1 à utiliser pour le sens remontant.

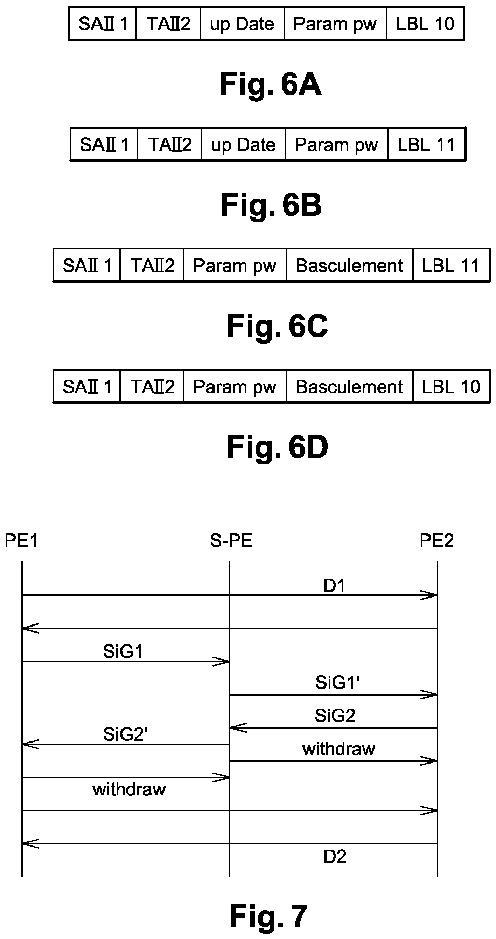

Un exemple d'un tel premier message SIG1 est représenté à la figure 6A. Ce message comprend une FEC {SAII1/TAII2} permettant d'identifier le sens de transmission descendant du circuit virtuel pw1, un champ contenant un paramètre upDate indiquant que le message SIG1 est un message de demande d'établissement d'une deuxième session de communication, un champ contenant les paramètres définissant la deuxième session à établir, conformément auxquels les données devront être transmises et une étiquette LBL10 à utiliser pour le sens remontant entre l'équipement commutateur et le premier équipement de terminaison PE1. Les paramètres définissant la deuxième session de communication sont par exemple le nouveau format d'encapsulation des données à émettre à destination de l'équipement de terminaison PE1.

Au cours d'une étape E2, l'équipement commutateur S-PE mémorise dans une table de commutation les paramètres définissant la deuxième session de communication et l'étiquette LBL10 à utiliser lors de la transmission de données en provenance du deuxième équipement de terminaison PE2 et à destination du premier équipement de terminaison PE1 au travers de la liaison L1 du circuit virtuel pw1.

Au cours d'une étape E4, l'équipement commutateur transmet un message SIG1' de demande d'établissement d'une deuxième session de communication au deuxième équipement de terminaison PE2.

Le message SIG1' est représenté à la figure 6B. Ce message comprend la FEC {SAII1/TAII2} permettant d'identifier le sens de transmission descendant du circuit virtuel pw1, le champ contenant le paramètre upDate indiquant que le message SIG1' est un message de demande d'établissement de la deuxième session de communication, le champ contenant les paramètres définissant la deuxième session et une étiquette LBL11 à utiliser entre le deuxième équipement de terminaison PE2 et l'équipement commutateur S-PE.

L'équipement commutateur S-PE a mémorisé dans sa table de commutation, préalablement au cours d'une étape E3, les paramètres définissant la deuxième session de communication et l'étiquette LBL11 à utiliser lors de la transmission de données en provenance de deuxième équipement de terminaison PE2 et à destination du premier équipement de terminaison PE1 au travers de la liaison L2 du circuit virtuel pw1.

Au cours d'une étape E5, l'équipement de terminaison PE2 reçoit le message de demande d'établissement d'une deuxième session de communication SIG1'.

Au cours d'une étape E6, le deuxième équipement de terminaison PE2 émet à destination de l'équipement commutateur un message SIG2 comportant une FEC {SAII1/TAII2} indiquant que la transmission s'effectue de l'équipement de terminaison PE2 vers l'équipement commutateur S-PE, un champ contenant les paramètres définissant la deuxième session de communication, un paramètre « Basculement » et l'étiquette LBL11. Un tel message SIG2 est représenté à la figure 6C. La présence du paramètre « Basculement » dans le message SIG2 indique que la phase de transmission de données PH1 se poursuit dorénavant conformément aux paramètres définissant la deuxième session de communication.

A réception du message SIG2, l'équipement commutateur S-PE supprime de sa table de commutation, au cours d'une étape E7, l'étiquette utilisée lors de la transmission de données au travers de la deuxième liaison L2 du circuit virtuel pw1 conformément aux paramètres définissant la première session de communication. A l'issue de cette étape E7, seule l'étiquette LBL11 est mémorisée dans la table de commutation de l'équipement commutateur S-PE. Le message SIG2 prend la forme d'un message de Notification tel que défini dans le RFC 5036.

Au cours d'une étape E8, l'équipement commutateur S-PE émet un message de demande de suppression des paramètres définissant la première session à destination du deuxième équipement de terminaison PE2 et par extension l'étiquette utilisée lors de la transmission de données au travers de la deuxième liaison L2 du circuit virtuel pw1 conformément aux paramètres définissant la première session de communication. Un tel message prend la forme d'un message de type LDP *Label withdraw.* Ce message de demande de suppression comprend la FEC {SAII1/TAII2}, indiquant que la transmission s'effectue de l'équipement de terminaison PE2 vers l'équipement de terminaison PE1, et l'étiquette utilisée lors de la transmission de données au travers de la deuxième liaison L2 du circuit virtuel pw1 conformément aux paramètres définissant la première session de communication.

A réception du message de demande de suppression des paramètres définissant la première session, le deuxième équipement de terminaison supprime de sa table de commutation l'étiquette utilisée lors de la transmission de données au travers de la deuxième liaison L2 du circuit virtuel pw1 conformément aux paramètres définissant la première session de communication, au cours d'une étape E9.

Au cours d'une étape E10, l'équipement commutateur S-PE émet à destination du premier équipement de terminaison un message SIG2' comportant une FEC {SAII1/TAII2} indiquant que la transmission s'effectue de l'équipement de terminaison PE2 vers l'équipement de terminaison PE1, un champ contenant les paramètres définissant la deuxième session de communication, un paramètre « Basculement » et l'étiquette LBL10. Un tel message SIG2' est représenté à la figure 6D. La présence du paramètre « Basculement » dans le message SIG2' indique que les données transmises lors de la phase de transmission de données PH1 se poursuit dorénavant conformément aux paramètres définissant la deuxième session de communication.

A réception du message SIG2', l'équipement de terminaison PE1 supprime de sa table de commutation, au cours d'une étape E11, l'étiquette utilisée lors de la transmission de données au travers de la première liaison L1 du circuit virtuel pw1 conformément aux paramètres définissant la première session de communication. A l'issue de cette étape E11, seule l'étiquette LBL10 est mémorisée dans la table de commutation de l'équipement de terminaison PE1.

Au cours d'une étape E12, l'équipement de terminaison PE1 émet un message de demande de suppression des paramètres définissant la première session à destination de l'équipement commutateur S-PE.

A réception du message de demande de suppression des paramètres définissant la première session, l'équipement commutateur S-PE supprime de sa table de commutation l'étiquette utilisée lors de la transmission de données au travers de la première liaison L1 du circuit virtuel pw1 conformément aux paramètres définissant la première session de communication, au cours d'une étape E13.

Il est bien entendu que les équipements de terminaison PE1 et PE2 peuvent jouer indifféremment le rôle de l'initiateur de l'émission du premier message de demande de modification d'un paramètre du circuit virtuel pw1 lors de la mise en oeuvre du procédé objet de l'invention.

La figure 7 représente les différents échanges de messages intervenant entre l'équipement de terminaison PE1 et l'équipement de terminaison PE2 lors de la mise en oeuvre de la solution objet de l'invention.

Un flux de données D1 est transmis au travers du circuit virtuel pw1 entre les équipements de terminaison PE1 et PE2. Ce flux de données comprend des données dont la charge utile est de 15 bits par exemple, conformément aux paramètres définissant la première session de communication établie au travers du circuit virtuel pw1.

Lorsqu'une modification de format intervient au niveau de l'équipement de terminaison PE1, par exemple, celui-ci émet à destination de l'équipement commutateur S-PE un premier message SIG1 de demande d'établissement d'une deuxième session de communication au travers du circuit virtuel pw1 afin de transmettre des donnés depuis l'équipement de terminaison PE2 vers l'équipement de terminaison PE1, conforme à l'invention, à destination de l'équipement de terminaison PE2. Un tel premier message SIG1 comprend les paramètres définissant la deuxième session de communication à utiliser pour le sens remontant.

La modification de format intervenant au niveau de l'équipement de terminaison PE1 est par exemple une augmentation du nombre de bits de la charge utile des données de 15 bits à 20 bits. Ainsi, le message de demande d'établissement d'une deuxième session de communication SIG1 indique que la nouvelle charge utile des données transmises dans le sens remontant par le circuit virtuel pw1 est de 20 bits.

Dès réception du message SIG1, l'équipement commutateur est apte à transmettre des données conformément aux paramètres définissant la deuxième session de communication. Il suffit pour cela qu'il en reçoive l'autorisation du deuxième équipement de terminaison PE2.

L'équipement commutateur transmet à son tour un message SIG1' de demande d'établissement de la deuxième session de communication au deuxième équipement de terminaison PE2.

A réception de ce message de demande d'établissement de la deuxième session de communication SIG1', l'équipement de terminaison PE2 se configure afin de pouvoir émettre des données à destination de l'équipement de terminaison PE1 au travers du circuit virtuel pw1 conformément aux paramètres définissant la deuxième session de communication.

En réponse au message SIG1', le deuxième équipement de terminaison PE2 émet à destination de l'équipement commutateur un message SIG2 indiquant à l'équipement commutateur que les données qui lui sont transmises pas le deuxième équipement de terminaison PE2 sont maintenant conformes aux paramètres définissant la deuxième session de communication. Ce message autorise l'équipement commutateur à supprimer de sa table de commutation tous les paramètres définissant la première session de communication.

En réponse au message SIG2, l'équipement commutateur S-PE émet un premier message de demande de suppression (*Withdraw*) des paramètres définissant la première session de communication à destination du deuxième équipement de terminaison PE2.

L'équipement commutateur émet également un deuxième message SIG2' indiquant à l'équipement de terminaison PE1 que les données qui lui sont transmises pas le deuxième équipement de terminaison PE2 sont maintenant conformes aux paramètres définissant la deuxième session de communication.

En réponse au message SIG2', l'équipement de terminaison PE1 émet un deuxième message de demande de suppression des paramètres définissant la première session de communication à destination de l'équipement commutateur S-PE.

Ainsi, après émission du premier message SIG1 à destination de l'équipement de terminaison PE2, l'équipement de terminaison PE1 est apte à recevoir à la fois des données encapsulées conformément à l'ancien format, c'est-à-dire des blocs de données présentant une charge utile de 15 bits, et des données conformément au nouveau format, c'est-à-dire des blocs de données présentant une charge utile de 20 bits. Ceci reste vrai jusqu'à ce que l'équipement de terminaison PE1 émette le deuxième message de suppression. Une fois ce message de suppression émis, le premier équipement de terminaison PE1 n'est plus apte qu'à recevoir des données conformes aux paramètres définissant la deuxième session de communication.

Bien que le circuit virtuel pw1 ait été modifié suite à l'échange de messages de demande d'établissement d'une deuxième session de communication, et qu'il soit apte à transmettre des données présentant une charge utile de 20 bits, les équipements de terminaison client CE1 peuvent continuer à générer pendant un certain temps des données dont la charge utile est de 15 bits.

Le circuit virtuel pw1 ne pouvant transmettre que des paquets de données dont la charge utile est de 20 bits, les équipements de terminaison PE1 et PE2 complètent la charge utile à l'aide de bits de bourrage. Ainsi, lorsque l'un des équipements de terminaison client CE1, CE2 génère des données dont la charge utile est 15 bits, l'équipement de terminaison émettant les données PE1, PE2 rajoute 5 bits de bourrage avant émission des données.

Lorsque la modification de format consiste à diminuer la charge utile des données, par exemple de 15 à 10 bits, il est nécessaire que les équipements de terminaison clients CE1, CE2 génèrent des données présentant une charge utile de 10 bits avant mise en oeuvre du procédé objet de l'invention. Le circuit virtuel pw1 ne pouvant transmettre que des paquets de données dont la charge utile est de 15 bits, les équipements de terminaison PE1 et PE2 complètent la charge utile à l'aide de bits de bourrage. Ainsi, lorsque l'un des équipements de terminaison client CE1, CE2 génère des données dont la charge utile est 10 bits, l'équipement de terminaison émettant les données PE1, PE2 rajoute 5 bits de bourrage avant émission des données jusqu'à ce que le circuit virtuel pw1 ait été modifié conformément à l'invention.

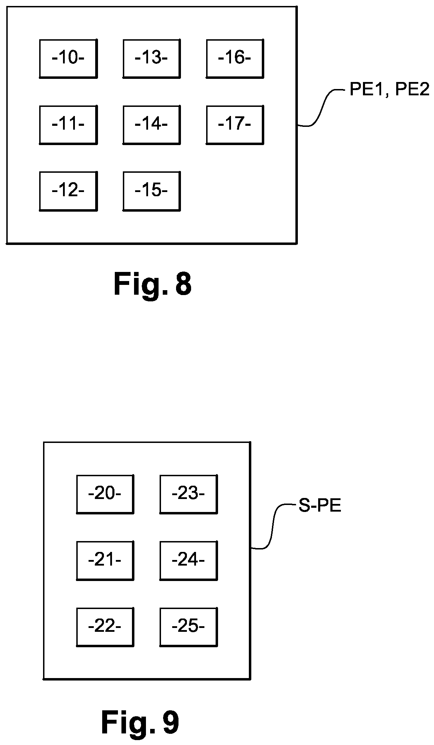

La figure 8 représente un équipement de terminaison PE1, PE2 apte à mettre en oeuvre le procédé de communication objet de l'invention.

Un tel équipement de terminaison PE1, PE2 comprend des moyens d'émission 10 d'un message de demande d'établissement d'une session de communication, des moyens de réception du message de demande d'établissement d'une session de communication 11, des moyens d'établissement d'une session de communication et des moyens 13 de transmission de données.

L'équipement de terminaison objet de l'invention PE1, PE2 comprend également des moyens d'émission 14 d'un message de demande de suppression de paramètres définissant une session de communication et des moyens de réception 15 du message de demande de suppression de paramètres définissant une session de communication.

Enfin l'équipement de terminaison objet de l'invention PE1, PE2 comprend également des moyens d'émission 16 d'un message indiquant à l'équipement de terminaison qui le reçoit que les données qui lui sont transmises sont maintenant conformes aux paramètres définissant la session de communication établie. L'équipement de terminaison PE1, PE2 comprend également des moyens 17 de réception du message indiquant à l'équipement de terminaison qui le reçoit que les données qui lui sont transmises sont maintenant conformes aux paramètres définissant la session de communication établie

La figure 9 représente un équipement commutateur S-PE apte à mettre en oeuvre le procédé de communication objet de l'invention.

Un tel équipement commutateur S-PE comprend des moyens de réception d'un message de demande d'établissement d'une session de communication 20, et des moyens 21 d'émission du message de demande d'établissement d'une session de communication.

L'équipement commutateur comprend également des moyens d'émission 22 d'un message de demande de suppression de paramètres définissant une session de communication et des moyens de réception 23 du message de demande de suppression de paramètres définissant une session de communication.

Enfin l'équipement commutateur S-PE comprend également des moyens d'émission 24 d'un message indiquant à l'équipement qui le reçoit que les données qui lui sont transmises sont maintenant conformes aux paramètres définissant la session de communication établie. L'équipement commutateur comprend également des moyens 25 de réception du message indiquant à l'équipement qui le reçoit que les données qui lui sont transmises sont maintenant conformes aux paramètres définissant la session de communication établie.

L'invention a encore pour objet un programme d'ordinateur, notamment un programme d'ordinateur sur ou dans un support d'informations ou mémoire, adapté à mettre en oeuvre la première phase du procédé de communication objet de l'invention.

Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter les procédés de diffusion et de réception selon l'invention.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

## Revendications

1. Procédé de communication au travers d'un circuit virtuel dont un sens de transmission est identifié par une classe d'équivalence de transfert, FEC, ledit circuit virtuel étant établi selon un protocole de distribution d'étiquettes, entre un premier et un deuxième équipements de terminaison au travers d'au moins un équipement commutateur, les équipements de terminaison et ledit au moins un équipement commutateur appartenant à un réseau de commutation de paquets, ledit procédé comprenant au cours d'une phase de transmission de données au travers du circuit virtuel, conformément à des premiers paramètres représentatifs d'un format d'encapsulation de données définissant une première session de communication établie entre le premier et le deuxième équipement de terminaison :
- une étape de réception par ledit au moins un équipement commutateur puis par le deuxième équipement de terminaison d'un message d'établissement (SIG1, SIG1') d'une deuxième session de communication au travers dudit circuit virtuel, le message d'établissement comprenant la FEC permettant d'identifier le sens de transmission du circuit virtuel et des deuxièmes paramètres représentatifs d'un format d'encapsulation de données définissant la deuxième session, les deuxièmes paramètres représentatifs d'un format d'encapsulation de données étant distincts desdits premiers paramètres représentatifs d'un format d'encapsulation de données,
- une étape de réception par ledit au moins un équipement commutateur puis par ledit premier équipement de terminaison d'un message de notification (SIG2, SIG2') comprenant la FEC permettant d'identifier le sens de transmission du circuit virtuel et lesdits deuxièmes paramètres définissant ladite deuxième session, ainsi qu'un paramètre de basculement (Basculement) indiquant que la transmission de données se poursuit au travers dudit circuit virtuel conformément auxdits paramètres définissant la deuxième session de communication.

2. Procédé de communication selon la revendication 1, dans lequel, le premier équipement de terminaison étant disposé en aval de l'équipement commutateur et le deuxième équipement de terminaison étant disposé en amont, l'équipement commutateur met en oeuvre suite à la réception du message de notification comprenant des paramètres définissant la deuxième session :
- une étape d'émission à destination d'un équipement voisin situé en amont, ou équipement amont, d'un message de demande de suppression des paramètres définissant la première session,

3. Procédé de communication selon l'une quelconque des revendications précédentes comprenant à réception par un équipement aval du message de notification, une étape de configuration d'une table de commutation de l'équipement aval à l'issue de laquelle les paramètres définissant la première session sont supprimés de la table de commutation.

4. Procédé de communication selon la revendication 2 comprenant à réception par un équipement amont du message de demande de suppression des paramètres définissant la première session, une étape de configuration d'une table de commutation de l'équipement amont à l'issue de laquelle les paramètres définissants la première session sont supprimés de la table de commutation.

5. Equipement de terminaison appartenant à un réseau de commutation de paquets, un circuit virtuel dont un sens de transmission est identifié par un classe d'équivalence de transfert, FEC, ledit circuit virtuel étant établi selon un protocole de distribution d'étiquettes, entre un premier équipement de terminaison et ledit équipement de terminaison au travers d'au moins un équipement commutateur, le premier équipement de terminaison et ledit au moins un équipement commutateur appartenant au réseau de commutation de paquets, ledit équipement de terminaison comprenant des moyens de transmission de données au travers du circuit virtuel, conformément à des premiers paramètres représentatifs d'un format d'encapsulation de données définissant une première session de communication établie entre le premier équipement de terminaison et l'équipement de terminaison, ledit équipement de terminaison comprenant :
- des moyens de réception d'un message d'établissement (SIG1') d'une deuxième session de communication au travers dudit circuit virtuel, le message d'établissement comprenant la FEC permettant d'identifier le sens de transmission du circuit virtuel et des deuxièmes paramètres représentatifs d'un format d'encapsulation de données définissant la deuxième session, les deuxièmes paramètres représentatifs d'un format d'encapsulation de données étant distincts desdits premiers paramètres représentatifs d'un format d'encapsulation de données,
- des moyens d'émission à destination dudit au moins un équipement commutateur, d'un message de notification (SIG2) comprenant la FEC permettant d'identifier le sens de transmission du circuit virtuel et lesdits deuxièmes paramètres définissant ladite deuxième session, ainsi qu'un paramètre de basculement indiquant que la transmission des données se poursuit au travers dudit circuit virtuel avec la deuxième session de communication.

6. Equipement commutateur appartenant à un réseau de commutation de paquets, au travers duquel un circuit virtuel dont un sens de transmission est identifié par un classe d'équivalence de transfert, FEC est établi selon un protocole de distribution d'étiquettes, entre un premier équipement de terminaison disposé en aval de l'équipement commutateur et un deuxième équipement de terminaison disposé en amont, le premier et le deuxième équipement de terminaison appartenant au réseau de commutation de paquets, des données étant transmises au travers du circuit virtuel conformément à des paramètres représentatifs d'un format d'encapsulation de données définissant une première session de communication établie entre le premier et le deuxième équipement de terminaison, l'équipement commutateur comprenant :
- des moyens de réception, puis d'émission vers l'équipement de terminaison amont, d'un message d'établissement (SIG1, SIG1') d'une deuxième session de communication au travers dudit circuit virtuel, le message d'établissement comprenant la FEC permettant d'identifier le sens de transmission du circuit virtuel et des deuxièmes paramètres représentatifs d'un format d'encapsulation de données définissant la deuxième session, les deuxièmes paramètres représentatifs d'un format d'encapsulation de données étant distincts desdits premiers paramètres représentatifs d'un format d'encapsulation de données,
- des moyens de réception, puis d'émission vers l'équipement de terminaison aval, d'un message de notification (SIG2, SIG2') comprenant la FEC permettant d'identifier le sens de transmission du circuit virtuel et desdits deuxièmes paramètres représentatifs d'un format d'encapsulation de données définissant une deuxième session au travers dudit circuit virtuel, ainsi qu'un paramètre de basculement indiquant que la transmission des données se poursuit au travers dudit circuit virtuel conformément auxdits paramètres définissant la deuxième session de communication,
- des moyens d'émission à destination d'un équipement voisin situé en amont, ou équipement amont, d'un message de demande de suppression des paramètres définissant la première session,

7. Programme d'ordinateur, **caractérisé en ce qu'**il comprend des instructions de code de programme pour la mise en oeuvre des étapes du procédé selon la revendication 1 lorsque le programme est exécuté par un processeur.

## Patentansprüche

1. Verfahren zur Kommunikation über eine virtuelle Schaltung, von der eine Übertragungsrichtung von einer Forwarding Equivalence Class, FEC, erkannt wird, wobei die virtuelle Schaltung gemäß einem Labelverteilungsprotokoll zwischen einer ersten und einer zweiten Abschlusseinrichtung über mindestens eine Schalteinrichtung aufgebaut wird, wobei die Abschlusseinrichtungen und die mindestens **eine** Schalteinrichtung zu einem Paketübermittlungsnetz gehören, wobei das Verfahren während einer Datenübertragungsphase über die virtuelle Schaltung entsprechend ersten Parametern, die für ein eine zwischen der ersten und der zweiten Abschlusseinrichtung aufgebaute erste Kommunikationssitzung definierendes Datenverkapselungsformat repräsentativ sind, enthält:
- einen Schritt des Empfangs durch die mindestens eine Schalteinrichtung, dann durch die zweite Abschlusseinrichtung, einer Aufbaunachricht (SIG1, SIG1') einer zweiten Kommunikationssitzung über die virtuelle Schaltung, wobei die Aufbaunachricht die die Erkennung der Übertragungsrichtung der virtuellen Schaltung ermöglichende FEC und für ein die zweite Sitzung definierendes Datenverkapselungsformat repräsentative zweite Parameter enthält, wobei die für ein Datenverkapselungsformat repräsentativen zweiten Parameter sich von den für ein Datenverkapselungsformat repräsentativen ersten Parametern unterscheiden,
- einen Schritt des Empfangs durch die mindestens eine Schalteinrichtung, dann durch die erste Abschlusseinrichtung, einer Benachrichtigung (SIG2, SIG2'), welche die die Erkennung der Übertragungsrichtung der virtuellen Schaltung ermöglichende FEC und die die zweite Sitzung definierenden zweiten Parameter sowie einen Umschaltparameter (Umschaltung) enthält, der anzeigt, dass die Datenübertragung über die virtuelle Schaltung gemäß den die zweite Kommunikationssitzung definierenden Parametern fortgesetzt wird.

2. Kommunikationsverfahren nach Anspruch 1, wobei, da die erste Abschlusseinrichtung stromabwärts hinter der Schalteinrichtung und die zweite Abschlusseinrichtung stromaufwärts angeordnet ist, die Schalteinrichtung nach Empfang der die zweite Sitzung definierende Parameter enthaltenden Benachrichtigung durchführt:
- einen Schritt des Sendens an eine benachbarte stromaufwärts befindliche Einrichtung oder stromaufwärtige Einrichtung einer Anforderungsnachricht des Löschens der die erste Sitzung definierenden Parameter.

3. Kommunikationsverfahren nach einem der vorhergehenden Ansprüche, das bei Empfang der Benachrichtigung durch eine stromabwärtige Einrichtung einen Schritt der Konfiguration einer Schalttabelle der stromabwärtigen Einrichtung enthält, nach der die die erste Sitzung definierenden Parameter aus der Schalttabelle gelöscht werden.

4. Kommunikationsverfahren nach Anspruch 2, das bei Empfang der Anforderungsnachricht des Löschens der die erste Sitzung definierenden Parameter durch eine stromaufwärtige Einrichtung einen Schritt der Konfiguration einer Schalttabelle der stromaufwärtigen Einrichtung enthält, nach dem die die erste Sitzung definierenden Parameter aus der Schalttabelle gelöscht werden.

5. Abschlusseinrichtung, die zu einem Paketübermittlungsnetz gehört, eine virtuelle Schaltung, von der eine Übertragungsrichtung von einer Forwarding Equivalence Class, FEC, erkannt wird, wobei die virtuelle Schaltung gemäß einem Labelverteilungsprotokoll zwischen einer ersten Abschlusseinrichtung und der Abschlusseinrichtung über mindestens eine Schalteinrichtung aufgebaut wird, wobei die erste Abschlusseinrichtung und die mindestens eine Schalteinrichtung zum Paketübermittlungsnetz gehören, wobei die Abschlusseinrichtung Mittel zur Datenübertragung über die virtuelle Schaltung gemäß ersten Parametern enthält, die für ein eine zwischen der ersten Abschlusseinrichtung und der Abschlusseinrichtung aufgebaute erste Kommunikationssitzung definierendes Datenverkapselungsformat repräsentativ sind, wobei die Abschlusseinrichtung enthält:
- Empfangseinrichtungen einer Aufbaunachricht (SIG1') einer zweiten Kommunikationssitzung über die virtuelle Schaltung, wobei die Aufbaunachricht die die Erkennung der Übertragungsrichtung der virtuellen Schaltung ermöglichende FEC und zweite Parameter enthält, die für ein die zweite Sitzung definierendes Datenverkapselungsformat repräsentativ sind, wobei die für ein Datenverkapselungsformat repräsentativen zweiten Parameter sich von den für ein Datenverkapselungsformat repräsentativen ersten Parametern unterscheiden,
- Sendeeinrichtungen an die mindestens eine Schalteinrichtung einer Benachrichtigung (SIG2), welche die die Erkennung der Übertragungsrichtung der virtuellen Schaltung ermöglichende FEC und die die zweite Sitzung definierenden zweiten Parameter sowie einen Umschaltparameter enthält, der anzeigt, dass die Datenübertragung über die virtuelle Schaltung mit der zweiten Kommunikationssitzung fortgesetzt wird.

6. Schalteinrichtung, die zu einem Paketübermittlungsnetz gehört, über das eine virtuelle Schaltung, von der eine Übertragungsrichtung von einer Forwarding Equivalence Class, FEC, erkannt wird, gemäß einem Labelverteilungsprotokoll zwischen einer ersten stromabwärts hinter der Schalteinrichtung angeordneten Abschlusseinrichtung und einer zweiten stromaufwärts angeordneten Abschlusseinrichtung aufgebaut wird, wobei die erste und die zweite Abschlusseinrichtung zum Paketübermittlungsnetz gehören, wobei Daten über die virtuelle Schaltung gemäß Parametern übertragen werden, die für ein eine zwischen der ersten und der zweiten Abschlusseinrichtung aufgebaute erste Kommunikationssitzung definierendes Datenverkapselungsformat repräsentativ sind, wobei die Schalteinrichtung enthält:
- Einrichtungen zum Empfang, dann zum Senden an die stromaufwärtige Abschlusseinrichtung, einer Aufbaunachricht (SIG1, SIG1') einer zweiten Kommunikationssitzung über die virtuelle Schaltung, wobei die Aufbaunachricht die die Erkennung der Übertragungsrichtung der virtuellen Schaltung ermöglichende FEC und zweite Parameter enthält, die für ein die zweite Sitzung definierendes Datenverkapselungsformat repräsentativ sind, wobei die für ein Datenverkapselungsformat repräsentativen zweiten Parameter sich von den für ein Datenverkapselungsformat repräsentativen ersten Parametern unterscheiden,
- Mittel zum Empfang, dann zum Senden an die stromabwärtige Abschlusseinrichtung, einer Benachrichtigung (SIG2, SIG2'), welche die die Erkennung der Übertragungsrichtung der virtuellen Schaltung ermöglichende FEC und die zweiten Parameter, die für ein eine zweite Sitzung über die virtuelle Schaltung definierendes Datenverkapselungsformat repräsentativ sind, sowie einen Umschaltparameter enthält, der anzeigt, dass die Übertragung der Daten über die virtuelle Schaltung gemäß den die zweite Kommunikationssitzung definierenden Parametern fortgesetzt wird,
- Einrichtungen zum Senden an eine stromaufwärts befindliche benachbarte Einrichtung, oder stromaufwärtige Einrichtung, einer Anforderungsnachricht des Löschens der die erste Sitzung definierenden Parameter.

7. Computerprogramm, **dadurch gekennzeichnet, dass** es Programmcodeanweisungen zur Durchführung der Schritte des Verfahrens nach Anspruch 1 enthält, wenn das Programm von einem Prozessor ausgeführt wird.

## Claims

1. Method for communicating through a virtual circuit of which one direction of transmission is identified by a forwarding equivalence class, FEC, said virtual circuit being established in accordance with a label distribution protocol, between a first and a second terminating device through at least one switching device, the terminating devices and said at least one switching device belonging to a packet-switched network, said method comprising, during a phase of transmitting data through the virtual circuit, in accordance with first parameters representative of a data encapsulation format defining a first communication session established between the first and the second terminating device:
- a step of reception, by said at least one switching device and then by the second terminating device, of a message (SIG1, SIG1') to establish a second communication session through said virtual circuit, the establishment message comprising the FEC that makes it possible to identify the direction of transmission of the virtual circuit and second parameters representative of a data encapsulation format defining the second session, the second parameters representative of a data encapsulation format being separate from said first parameters representative of a data encapsulation format,
- a step of reception, by said at least one switching device and then by said first terminating device, of a notification message (SIG2, SIG2') comprising the FEC that makes it possible to identify the direction of transmission of the virtual circuit and said second parameters defining said second session, and a switching parameter (Basculement) indicating that the data transmission is continuing through said virtual circuit in accordance with said parameters defining the second communication session.

2. Communication method according to Claim 1, wherein, the first terminating device being positioned downstream of the switching device and the second terminating device being positioned upstream, the switching device implements, following the reception of the notification message comprising parameters defining the second session:
- a step of sending, to a neighbouring device situated upstream, or upstream device, a message requesting deletion of the parameters defining the first session.

3. Communication method according to either one of the preceding claims, comprising, upon reception of the notification message by a downstream device, a step of configuring a switch table of the downstream device, at the end of which step the parameters defining the first session are deleted from the switch table.

4. Communication method according to Claim 2, comprising, upon reception of the message requesting deletion of the parameters defining the first session by an upstream device, a step of configuring a switch table of the upstream device, at the end of which step the parameters defining the first session are deleted from the switch table.

5. Terminating device belonging to a packet-switched network, a virtual circuit of which one direction of transmission is identified by a forwarding equivalence class, FEC, said virtual circuit being established in accordance with a label distribution protocol, between a first terminating device and said terminating device through at least one switching device, the first terminating device and said at least one switching device belonging to the packet-switched network, said terminating device comprising means for transmitting data through the virtual circuit, in accordance with first parameters representative of a data encapsulation format defining a first communication session established between the first terminating device and the terminating device, said terminating device comprising:
- means for receiving a message (SIG1') to establish a second communication session through said virtual circuit, the establishment message comprising the FEC that makes it possible to identify the direction of transmission of the virtual circuit and second parameters representative of a data encapsulation format defining the second session, the second parameters representative of a data encapsulation format being separate from said first parameters representative of a data encapsulation format,
- means for sending, to said at least one switching device, a notification message (SIG2) comprising the FEC that makes it possible to identify the direction of transmission of the virtual circuit and said second parameters defining said second session, and a switching parameter indicating that the data transmission is continuing through said virtual circuit with the second communication session.

6. Switching device belonging to a packet-switched network, through which a virtual circuit of which one direction of transmission is identified by a forwarding equivalence class, FEC, is established in accordance with a label distribution protocol, between a first terminating device positioned downstream of the switching device and a second terminating device positioned upstream, the first and the second terminating device belonging to the packet-switched network, data being transmitted through the virtual circuit in accordance with parameters representative of a data encapsulation format defining a first communication session established between the first and the second terminating device, the switching device comprising:
- means for receiving, and then sending to the upstream terminating device, a message (SIG1, SIG1') to establish a second communication session through said virtual circuit, the establishment message comprising the FEC that makes it possible to identify the direction of transmission of the virtual circuit and second parameters representative of a data encapsulation format defining the second session, the second parameters representative of a data encapsulation format being separate from said first parameters representative of a data encapsulation format,
- means for receiving, and then sending to the downstream terminating device, a notification message (SIG2, SIG2') comprising the FEC that makes it possible to identify the direction of transmission of the virtual circuit and said second parameters representative of a data encapsulation format defining a second session through said virtual circuit, and a switching parameter indicating that the data transmission is continuing through said virtual circuit in accordance with said parameters defining the second communication session,
- means for sending, to a neighbouring device situated upstream, or upstream device, a message requesting deletion of the parameters defining the first session.

7. Computer program, **characterized in that** it comprises program code instructions for implementing the steps of the method according to Claim 1 when the program is executed by a processor.
